# FASCICULE DE BREVET EUROPEEN

(11) **EP 1 467 497 B1**
(45) Date de publication et mention de la délivrance du brevet: **30.03.2011**
(21) Numéro de dépôt: 04290928.3
(22) Date de dépôt: 07.04.2004
(51) Int. Cl.: H04B 3/56, H04L 12/28

(54) **Réseau local utilisant un réseau de distribution d'énergie électrique et dispositif de réflexion associé**
Lokales Netz unter Verwendung eines Netzes zur Verteilung elektrischer Energie und entsprechende Reflexionsvorrichtung
LAN using electrical power distribution network and corresponding reflection device

(30) Priorité: 07.04.2003 FR 0304264
(43) Date de publication de la demande: 13.10.2004
(73) Titulaire: FRANCE TELECOM, 75015 Paris (FR)
(72) Inventeur: Legaud, Pierre, 22300 Lannion (FR)
(74) Mandataire: Vidon, Patrice

(56) Documents cités:
- WO-A-00/79697
- WO-A-01/54297
- LIM C K ET AL: "Development of a test bed for high-speed power line communications" IEEE SERIAL, vol. 1, 4 décembre 2000 (2000-12-04), pages 451-456, XP010528235

## Description

La présente invention concerne un réseau local apte à permettre les transferts d'informations entre plusieurs appareils, notamment des appareils de communication. L'invention concerne plus particulièrement un perfectionnement permettant d'adapter un ou plusieurs réseaux câblés préexistants, destinés à d'autres usages, pour la constitution dudit réseau local, sans câblage spécifique. L'invention vise aussi tout réseau câblé pré-équipé pour constituer un tel réseau local.

Dans la suite de la description, on entend par réseau local un ensemble de lignes électriques, typiquement bifilaires, s'étendant dans un domaine, c'est-à-dire par exemple un local ou un groupe de locaux pour interconnecter entre eux certains appareils informatiques, de bureautique, ou audio vidéo conditionnés pour échanger des informations entre eux. L'invention se propose donc d'adapter un réseau de distribution d'énergie électrique sans modifier sa fonction d'origine pour lui permettre, en plus, de jouer le rôle de réseau local au sens défini ci-dessus.

Sont connus les réseaux locaux informatiques configurés à partir d'un réseau de distribution d'énergie électrique préexistant. Ces réseaux font appel à des technologies appelées communément CPL, acronyme de Courants Porteurs en Lignes (Powerline Communication). Les technologies CPL offrent la possibilité de transmettre des données par le biais du réseau électrique.

En utilisant les réseaux de distribution d'énergie électrique, il est ainsi possible, à partir d'un dispositif informatique relié à un point d'accès de type Internet, de transférer les informations reçues à d'autres dispositifs informatiques, sans avoir à installer de câblage spécifique pour ces transferts.

WO 00/79697 décrit par exemple un tel système de distribution locale de données par l'intermédiaire des lignes d'un réseau de distribution d'énergie électrique.

Les longueurs d'ondes des signaux utilisés pour faire transiter ces données sur les réseaux de distribution d'énergie sont souvent du même ordre de grandeur par rapport à la longueur des câbles des réseaux de distribution d'énergie. On ne peut alors pas considérer que les signaux transmis sont équipotentiels sur ces câbles.

Ainsi, tension et courant sont considérés comme une superposition d'au moins deux ondes se déplaçant en sens inverse sur la ligne du réseau de distribution d'énergie : une onde incidente et une onde inverse.

Les réseaux de distribution d'énergie électrique présentent une réponse fréquentielle qui n'est pas plate. Ceci est dû aux échos et réflexions entre émetteur et récepteur.

Pour résoudre ce problème, WO 01/54297 a proposé un procédé d'isolation des données dans un tel réseau de communications par l'utilisation de filtres passe bas. Une solution similaire proposée par Kim *et al* dans la publication « Developement of a test bed for High-Speed Power Line Communications » prévoit l'agencement de filtres atténuateurs entre les dispositifs de communication du réseau et le réseau de distribution électrique.

Un très grand débit impose une grande bande passante et si cette bande passante comporte des creux de fréquence (dus à des interférences liées à des trajets multiples), il y a perte totale de l'information pour la fréquence correspondante. Le canal est alors dit "sélectif' en fréquence.

Les modems utilisés pour le transfert d'informations via un réseau de distribution d'énergie assurent le transfert d'informations jusqu'à des distances de l'ordre d'une centaine de mètres. Ces modems utilisent par exemple des techniques de modulation de type OFDM (Orthogonal Frequency Division Multiplexing).

Dans cette technologie de modulation, on répartit un train binaire haut-débit en une multitude de trains ou de canaux, lesquels étant modulés à bas-débits. Chacun de ces sous-canaux est modulé par une fréquence différente, l'espacement entre chaque fréquence restant constant.

Ainsi, l'information est répartie sur un grand nombre de porteuses, créant ainsi des sous-canaux très étroits pour lesquels la réponse fréquentielle du canal peut être considérée comme constante.

En employant de tels modems dans des réseaux locaux utilisant le réseau de distribution d'énergie comme médium de transmission, le signal produit par un modem d'un réseau local, du fait de sa portée, génère du bruit sur les réseaux locaux proches qui utilisent eux aussi leur réseau de distribution d'énergie électrique comme médium de transmission.

Par exemple, dans un même immeuble, si plusieurs appartements disposent chacun d'un réseau local utilisant leur réseau de distribution d'énergie électrique comme médium de transmission, les données transmises dans un appartement perturbent les données reçues dans les autres appartements. Cette proximité des réseaux locaux dégrade donc leurs performances.

L'invention a pour but de résoudre les inconvénients précités en proposant un réseau local pour le transfert d'informations entre plusieurs dispositifs de communication reliés à un réseau de distribution d'énergie électrique alternative de fréquence prédéterminée, les informations véhiculées dans le réseau local étant transférées sous forme de signaux électriques formant des ondes sur le réseau de distribution d'énergie électrique dans une bande de fréquence supérieure à la fréquence prédéterminée, le réseau de distribution d'énergie électrique étant relié à un réseau de fourniture d'énergie électrique, caractérisé en ce que le réseau local comporte au moins un dispositif de réflexion des ondes formant des ondes réfléchies sur le réseau de distribution d'énergie.

Ainsi, le réseau local selon l'invention ne perturbe plus d'autres réseaux locaux reliés au réseau de fourniture d'énergie. Le bruit généré par le réseau local selon l'invention ne perturbe plus la réception de données dans les autres réseaux locaux reliés au réseau de fourniture d'énergie.

Plus précisément, le réseau de distribution d'énergie comporte des éléments d'atténuation des ondes du réseau de distribution d'énergie et le dispositif de réflexion est placé à un point prédéterminé du réseau de distribution d'énergie électrique tel que les éléments d'atténuation atténuent entre autres les ondes réfléchies sur le réseau de distribution d'énergie.

Ainsi, le transfert d'informations entre plusieurs dispositifs de communication du réseau local n'est pas perturbé, les ondes réfléchies par le dispositif de réflexion selon l'invention sont atténuées par les éléments d'atténuation du réseau de distribution d'énergie. Simplement, avec un dispositif de réflexion et en utilisant judicieusement les éléments d'atténuation du réseau de distribution d'énergie, l'invention évite de perturber le transfert d'informations entre les dispositifs de communication du réseau local.

Plus particulièrement, les éléments d'atténuation sont constitués d'au moins un moyen de protection d'une ligne de distribution d'énergie électrique du réseau de distribution d'énergie électrique.

Ainsi, en utilisant les atténuations inhérentes aux dispositifs de protection, le transfert d'informations entre les dispositifs de communication du réseau local n'est pas dégradé.

Plus précisément, le réseau de distribution d'énergie électrique comporte plusieurs lignes de distribution d'énergie électrique, un tableau électrique répartissant l'énergie électrique à chaque ligne de distribution d'énergie électrique et le tableau électrique est un élément d'atténuation.

Ainsi, en utilisant l'effet de coupleur du tableau électrique, l'onde réfléchie est atténuée.

Plus précisément, le dispositif de réflexion est placé dans le tableau électrique.

Ainsi, les ondes présentes sur une des lignes de distribution d'énergie électrique du réseau de distribution d'énergie électrique sont transmises aux autres lignes de distribution d'énergie électrique du réseau de distribution d'énergie électrique. Deux dispositifs de communication peuvent ainsi se transférer des informations tout en étant reliés à des lignes de distribution d'énergie électrique différentes. Le dispositif de réflexion étant séparé des dispositifs de communication par un nombre important d'éléments d'atténuation, la qualité du transfert d'informations entre les dispositifs de communication est maintenue.

Plus précisément, le dispositif de réflexion est placé dans une prise électrique mâle insérée dans une prise électrique femelle du réseau de distribution d'énergie électrique.

Ainsi, il est très facile pour un utilisateur non averti de placer le dispositif de réflexion dans le réseau local utilisant le réseau de distribution d'énergie électrique comme médium de transmission.

Préférentiellement, la prise électrique femelle est sur la ligne de distribution d'énergie électrique à laquelle sont reliés les dispositifs de communication et est placée entre les dispositifs de communication et le réseau de fourniture d'énergie électrique.

Ainsi, le transfert d'informations entre les dispositifs de communication est garanti.

Corrélativement, l'invention propose un dispositif pour le transfert d'informations entre plusieurs dispositifs de communication dans un réseau local, les dispositifs étant reliés à un réseau de distribution d'énergie électrique alternative de fréquence prédéterminée, les informations véhiculées dans le réseau local étant transférées sous forme de signaux électriques formant des ondes sur le réseau de distribution d'énergie électrique dans une bande de fréquence supérieure à la fréquence prédéterminée, le réseau de distribution d'énergie électrique étant relié à un réseau de fourniture d'énergie électrique, caractérisé en ce que le dispositif comporte des moyens pour réfléchir des ondes formant des ondes réfléchies sur le réseau de distribution d'énergie.

Préférentiellement, les moyens pour réfléchir et atténuer sont constitués d'au moins un condensateur.

Ainsi, la réflexion et l'atténuation sont effectuées d'une manière simple et peu onéreuse.

Plus précisément, le dispositif est intégré dans une prise électrique mâle.

Ainsi, celui-ci est facilement utilisable par une personne non spécialisée dans la réalisation de réseaux locaux utilisant un réseau de distribution d'énergie comme médium du réseau local.

Avantageusement, le dispositif est intégré dans un tableau électrique.

Ainsi, les ondes réfléchies sont atténuées par un grand nombre d'éléments d'atténuation du réseau de distribution d'énergie électrique. Il est aussi facile d'ajouter le dispositif selon l'invention dans un réseau de distribution d'énergie électrique existant.

Préférentiellement, le dispositif est placé entre la phase et le neutre du réseau de distribution d'énergie électrique.

Ainsi, en plaçant le dispositif en parallèle entre la phase et le neutre, il n'est pas nécessaire de considérer la puissance totale absorbée par les appareils connectés au réseau de distribution d'énergie pour déterminer les caractéristiques des éléments constituant le dispositif de réflexion.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
- la Fig. 1 représente un réseau local informatique utilisant un réseau de distribution d'énergie électrique préexistant comme médium de transmission;
- la Fig. 2 représente une ligne de distribution d'énergie utilisée comme médium du réseau local selon l'invention ;
- la Fig. 3 représente un tableau électrique d'un réseau de distribution d'énergie comportant le dispositif de réflexion selon l'invention ;
- la Fig. 4 représente le réseau local informatique utilisant un réseau de distribution d'énergie électrique comme médium de transmission dans lequel le dispositif de réflexion est placé à différents points prédéterminés du réseau de distribution d'énergie électrique ;
- la Fig. 5 représente un exemple de réalisation d'un dispositif de réflexion conforme à l'invention.

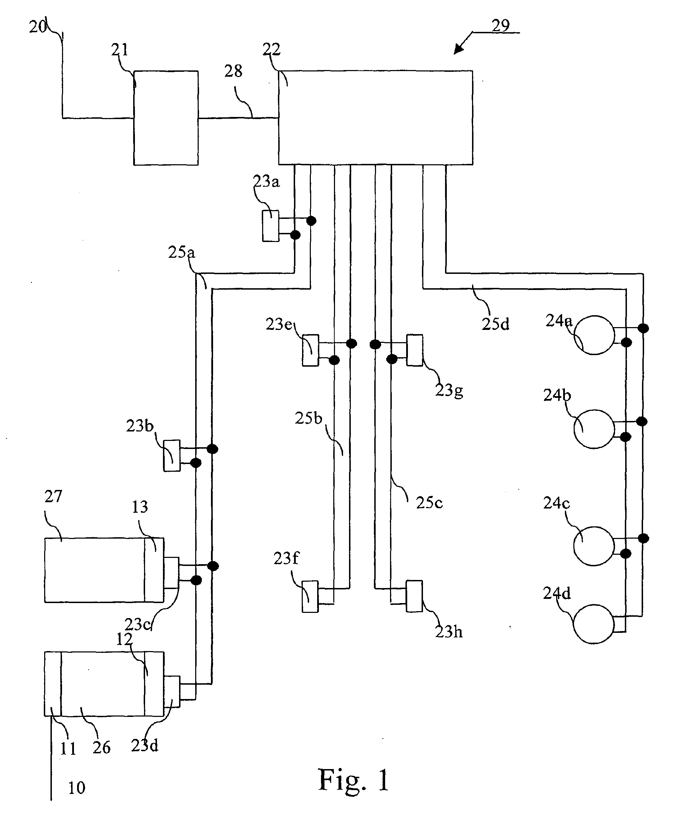

La **Fig. 1** représente un réseau local informatique utilisant un réseau de distribution d'énergie électrique préexistant comme médium de transmission.

Le réseau de distribution d'énergie électrique 29 est situé dans un local tel que par exemple un appartement, une maison ou un bureau.

Ce réseau est par exemple un réseau de distribution d'énergie électrique monophasé d'une tension alternative de 240 Volts dont la fréquence est de l'ordre de 50Hz.

Bien entendu, ce réseau de distribution d'énergie électrique peut être un réseau triphasé ou un réseau monophasé fournissant une tension alternative de l'ordre d'une centaine de Volts et à une fréquence de 50 ou 60Hz.

Le réseau de distribution d'énergie 29 est relié à un réseau de fourniture d'énergie 20 alimentant un ensemble de dispositifs de distribution d'énergie d'autres locaux non représentés sur la Fig. 1.

En entrée du réseau de distribution d'énergie électrique 29 est connecté un compteur 21 apte à déterminer l'énergie électrique consommée par les équipements 26, 27 et 24 reliés au réseau de distribution d'énergie 29. Ces équipements 26, 27 et 24 seront décrits ultérieurement en référence à la présente Fig. 1.

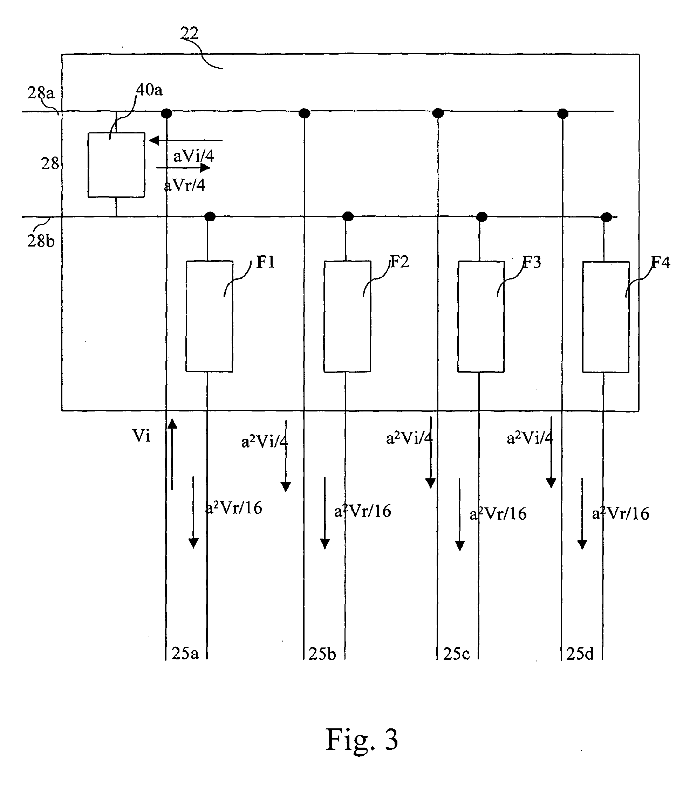

Ce compteur 21 est relié par l'intermédiaire d'un câble 28 à un tableau électrique 22. Le tableau électrique 22 sera décrit plus en détail en référence à la Fig. 3.

Le tableau électrique 22 distribue l'énergie électrique à une pluralité de lignes 25a, 25b, 25c et 25d qui assurent la distribution d'énergie aux différents équipements du local comprenant le réseau de distribution d'énergie 29.

A la ligne de distribution d'énergie 25a, sont reliées des prises électriques femelles 23a, 23b, 23c et 23d permettant la connexion de dispositifs tels que des ordinateurs 26 et 27.

L'ordinateur 26 est équipé d'un modem 11 de communication avec un réseau de communication 10. Le réseau de communication 10 est par exemple un réseau de type Internet, il peut aussi être un réseau câblé de fourniture de données audio vidéo ou autre.

L'ordinateur 26 est équipé d'un modem 12 lui permettant de communiquer avec un second ordinateur 27 lui aussi équipé d'un modem 13.

Les modems 12 et 13 sont par exemple des modems commercialisés par la Société ELCON sous la référence EPLC 10 Mi. Ces modems 12 et 13 utilisent préférentiellement les techniques de modulation de type OFDM précédemment mentionnées.

Ces modems 12 et 13 transfèrent des informations sur des porteuses dans un spectre en fréquence compris entre 4MHz et 20Mhz.

Ainsi, les modems 12 et 13, les prises électriques femelles 23c et 23d, la partie de ligne de distribution d'énergie 25a comprise entre les prises électriques femelles 23c et 23d constituent un réseau local utilisant un réseau câblé préexistant (prises électriques femelles 23c et 23d, ligne de distribution d'énergie 25a).

La ligne de distribution d'énergie 25a dispose de prises électriques femelles 23a et 23b non utilisées dans notre exemple.

Aux lignes de distribution d'énergie 25b et 25c sont reliées des prises électriques femelles 23e, 23f, et 23g et 23h permettant par exemple la connexion au réseau de distribution d'énergie électrique 29 d'appareils électroménagers (non représentés), d'équipements audio-vidéo (non représentés) ou autres.

Le réseau de distribution d'énergie 29 comporte aussi une ligne de distribution d'énergie 25d permettant la distribution de l'énergie électrique à des dispositifs d'éclairage notés 24a à 24d.

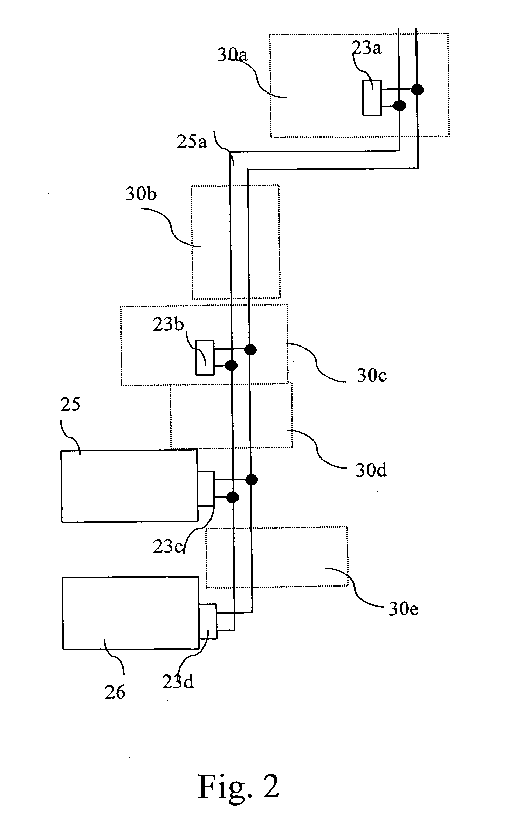

La **Fig. 2** représente une ligne de distribution d'énergie 25a utilisée comme médium du réseau local selon l'invention.

La ligne de distribution d'énergie 25a est décomposée en différents éléments notés 30a, 30b, 30c, 30d et 30e.

Les ondes électriques générées par les modems 12 et 13 ont une longueur d'onde non négligeable par rapport à la longueur de la ligne de distribution d'énergie 25a.

Ces modems 12 et 13 transfèrent des données dans un spectre en fréquence allant jusqu'à des fréquences de l'ordre de 20MHz. La longueur d'onde dans l'air d'une onde à une fréquence f de 20MHz est donnée par la formule λ = c/f où c est la célérité de la lumière. Bien entendu, lorsque l'onde se propage dans un câble, la célérité c doit être remplacée par la célérité c' du champ électromagnétique dans le câble. Ainsi, la longueur d'onde à la fréquence de 20MHz est considérée ici de l'ordre de 15 mètres.

Cette longueur d'onde est ainsi du même ordre de grandeur que la longueur d'une ligne de distribution d'énergie 25 classique dans un appartement ou une maison. Elle est souvent supérieure à une longueur d'une dizaine de mètres.

Les éléments 30 constituent des éléments d'atténuation des ondes formées par les signaux électriques des modems 12 et 13.

L'élément 30a comprend la prise électrique femelle 23a. La prise électrique femelle 30a constitue une branche ouverte de la ligne de distribution d'énergie électrique 25a. L'élément 30a crée donc des réflexions atténuant les ondes formées par les signaux électriques des modems 12 et 13.

Il en est de même pour l'élément 30c.

Le câblage d'un réseau de distribution d'énergie électrique 29 dans un local est souvent réalisé à l'aide de fils conducteurs semi-rigides logés dans une gaine. La distance entre les fils conducteurs n'est pas constante le long de la ligne de distribution d'énergie électrique et varie au gré des aléas de l'installation de ces fils conducteurs. En général, on considère qu'un réseau de distribution d'énergie électrique présente une impédance caractéristique moyenne de l'ordre de 120 Ohms.

L'impédance caractéristique d'une ligne de transmission dépend de la résistance linéique des conducteurs, de leur inductance linéique, de leur capacité linéique ainsi que de leur conductance linéique. La capacité linéique est déterminée en fonction de la distance séparant les conducteurs, des surfaces de conducteurs en regard l'un de l'autre ainsi que de la permittivité du matériau placé entre les deux conducteurs. Cette capacité linéique est particulièrement instable pour les réseaux de distribution d'énergie électrique. En effet, la distance séparant les conducteurs n'est pas contrôlée. Ceci rend alors l'impédance caractéristique d'une ligne de distribution d'énergie 25 non uniforme.

Cette impédance caractéristique est très variable et toute variation de cette impédance caractéristique, représentée par les éléments 30b, 30d et 30e crée des atténuations, voire des réflexions atténuant les ondes formées par les signaux électriques des modems 12 et 13.

Ainsi, la ligne 25a de distribution d'énergie électrique comporte des éléments d'atténuation (notés 30) des ondes formées par les signaux électriques des modems 12 et 13 dans le réseau de distribution d'énergie 29.

La **Fig. 3** représente un tableau électrique 22 d'un réseau de distribution d'énergie 29 comportant le dispositif de réflexion selon l'invention.

Le tableau électrique 22 est relié au réseau de fourniture d'énergie 20 alimentant un ensemble de locaux non représentés par l'intermédiaire de conducteurs 28.

Par souci de clarté, les conducteurs reliant l'installation électrique à la terre n'ont pas été représentés, seuls les conducteurs appelés communément phase (notée 28b) et neutre (noté 28a) sont représentés ici.

Il est bien entendu que l'invention telle que décrite ici fonctionne aussi bien pour des signaux transmis par les modems 12 et 13 entre la phase et le neutre que pour des signaux transmis par les modems 12 et 13 entre la phase et la terre ou le neutre et la terre. Le dispositif de réflexion des ondes électriques incidentes, formant des ondes électriques réfléchies sur le réseau local doit alors dans ce cas être placé respectivement entre la phase et la terre ou entre le neutre et la terre.

Le tableau électrique 22 comporte à titre d'exemple quatre circuits de protection de lignes 25 notés F1, F2, F3 et F4.

Ces circuits de protection F1 à F4 de lignes 25 sont par exemple des disjoncteurs ou des fusibles.

Ces circuits de protection F1 à F4 atténuent les ondes traversant ceux-ci de quelques décibels, ces circuits de protection constituent donc des éléments d'atténuation des ondes dans le réseau 29.

Le circuit de protection F1 protège la ligne de distribution d'énergie 25a de possibles courts-circuits ou surcharges sur celle-ci.

Le circuit de protection F2 protège la ligne de distribution d'énergie 25b de possibles courts-circuits ou surcharges sur celle-ci.

Le circuit de protection F3 protège la ligne de distribution d'énergie 25c de possibles courts-circuits ou surcharges sur celle-ci.

Le circuit de protection F4 protège la ligne de distribution d'énergie 25d de possibles courts-circuits ou surcharges sur celle-ci.

Le tableau électrique 22 comporte aussi un dispositif noté 40a de réflexion d'ondes formées par les signaux électriques générés par les modems 12 ou 13 de la Fig. 1.

Ce dispositif de réflexion 40a, placé entre la phase et le neutre du réseau de distribution d'énergie électrique 28, réfléchit les ondes se propageant dans le réseau de distribution d'énergie 29 et ainsi bloque toute propagation de celles-ci à l'extérieur du réseau de distribution d'énergie électrique 29.

Ainsi, les ondes se propageant dans le réseau de distribution d'énergie 29 ne sont pas propagées ou du moins fortement atténuées dans le réseau de fourniture d'énergie 20 alimentant un ensemble de réseaux de distribution d'énergie utilisés comme réseaux locaux (non représentés).

Ainsi, les ondes se propageant dans le réseau de distribution 29 d'énergie ne perturbent pas les réseaux locaux proches.

A titre d'exemple, une onde incidente Vi est représentée sur la ligne de distribution d'énergie 25a. Cette onde incidente est par exemple formée par les signaux électriques générés par le modem 12 dans le réseau local constitué par la ligne de distribution d'énergie 25a.

L'onde Vi est en réalité constituée d'une combinaison d'une pluralité d'ondes, une onde incidente ainsi que des ondes réfléchies générées par les éléments d'atténuation notés 30 de la ligne de distribution d'énergie 25a. Néanmoins, par souci de simplification et de clarté, l'onde Vi sera appelée par la suite onde incidente.

L'onde Vi est atténuée par le circuit de protection F1 et forme alors une onde incidente atténuée d'un facteur d'atténuation noté a.

Le tableau électrique 22 dispose dans notre exemple de trois autres lignes de distribution d'énergie notées 25b, 25c et 25d protégées respectivement par les circuits de protection F2, F3 et F4 et est relié au réseau de fourniture d'énergie 20 alimentant un ensemble de locaux non représentés par l'intermédiaire de conducteurs 28a et 28b sur lesquels est connecté le dispositif de réflexion 40a.

Le tableau électrique 22 est alors assimilable à un coupleur dans le spectre en fréquence dans lequel sont transférées les données sur le réseau local.

Ainsi, l'onde incidente aVi se décompose en quatre ondes incidentes, dont les amplitudes sont semblables et de l'ordre de aVi/4.

Une onde aVi/4 se propage à travers le circuit de protection F2 et forme un signal a²Vi/4 sur la ligne de distribution d'énergie 25b.

Une onde aVi/4 se propage à travers le circuit de protection F3 et forme un signal a²Vi/4 sur la ligne de distribution d'énergie 25c.

Une onde aVi/4 se propage à travers le circuit de protection F4 et forme un signal a²Vi/4 sur la ligne de distribution d'énergie 25d.

Une onde aVi/4 se propage vers les conducteurs 28a et 28b sur lesquels est connecté le dispositif de réflexion 40a.

Le dispositif de réflexion 40a réfléchit alors cette onde aVi/4 et forme alors une onde réfléchie notée aVr/4.

Le tableau électrique 22 est de la même façon assimilable à un coupleur pour l'onde réfléchie dans le spectre en fréquence dans lequel sont transférées les données sur le réseau local.

Ainsi, l'onde réfléchie aVr/4 se décompose en quatre ondes réfléchies, dont les amplitudes sont semblables et de l'ordre de aVr/16.

Une onde aVr/16 se propage à travers le circuit de protection F1 et forme un signal a²Vr/16 sur la ligne de distribution d'énergie 25a.

Une onde aVr/16 se propage à travers le circuit de protection F2 et forme un signal a²Vr/16 sur la ligne de distribution d'énergie 25b.

Une onde aVr/16 se propage à travers le circuit de protection F3 et forme un signal a²Vr/16 sur la ligne de distribution d'énergie 25c.

Une onde aVr/16 se propage à travers le circuit de protection F4 et forme un signal a²Vr/16 sur la ligne de distribution d'énergie 25d.

Le dispositif de réflexion 40a ainsi placé à un point prédéterminé du réseau de distribution d'énergie électrique empêche la propagation, dans le réseau de fourniture d'énergie 20 alimentant un ensemble de locaux, des ondes se propageant dans le réseau de distribution d'énergie 29.

Ainsi, les ondes se propageant dans le réseau de distribution d'énergie ne perturbent pas les réseaux locaux proches.

De plus, la position prédéterminée du dispositif de réflexion 40a dans le réseau de distribution d'énergie 29 limite grandement l'influence de l'onde réfléchie sur la qualité de la transmission dans le réseau local.

En effet, même si l'onde réfléchie est en opposition de phase avec l'onde incidente, les amplitudes des ondes incidentes et réfléchies sur chacune des lignes 25a, 25b, 25c et 25d sont différentes et donc les ondes incidentes et réfléchies ne s'annulent pas mutuellement dans le réseau de distribution d'énergie.

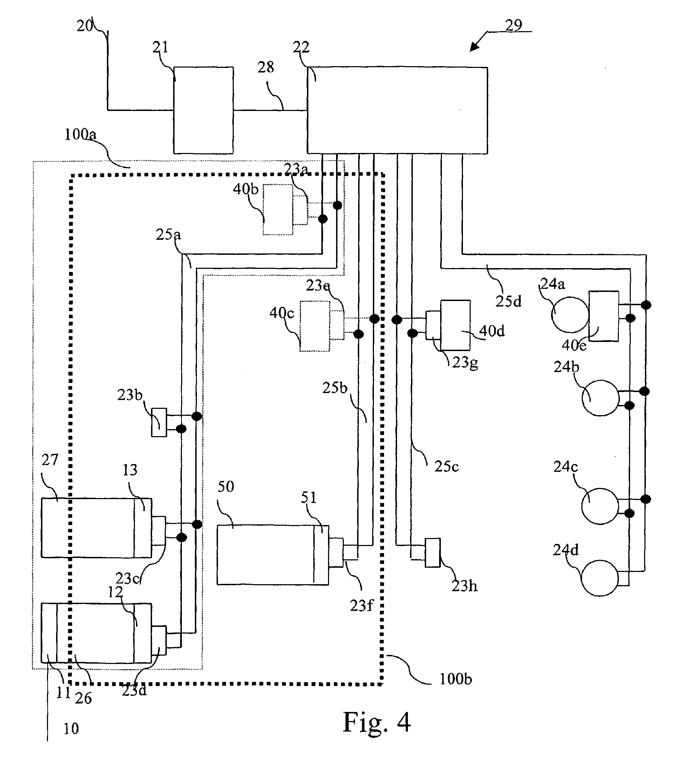

La **Fig. 4** représente le réseau local informatique utilisant un réseau de distribution d'énergie comme médium de transmission dans lequel le dispositif de réflexion est placé à différents points prédéterminés du réseau de distribution d'énergie électrique.

Le réseau de fourniture d'énergie 20, le réseau de distribution d'énergie 29 sont identiques au réseau de fourniture 20 et distribution d'énergie 29 de la Fig. 1, ils ne seront pas décrits plus en détail.

Selon une première réalisation de l'invention, un réseau local 100a (délimité par des segments en pointillés fins) est réalisé avec la ligne de distribution d'énergie 25a.

Selon une première variante de réalisation du réseau local 100a, un dispositif de réflexion 40b est placé sur la prise électrique femelle 23a.

La ligne de distribution d'énergie 25a, conformément à la Fig. 2, comporte des éléments d'atténuation 30a, 30b, 30c, 30d et 30e créant des atténuations, voire des réflexions atténuant les ondes formées par les signaux électriques des modems 12 et 13.

Le dispositif de réflexion 40b est placé dans le réseau de distribution d'énergie 29 de manière à ce que l'onde réfléchie par celui-ci soit atténuée par les éléments d'atténuation 30a, 30b, 30c et 30d.

Ainsi, la position prédéterminée du dispositif de réflexion 40b dans la ligne de distribution d'énergie 25a limite grandement l'influence de l'onde réfléchie sur la qualité de la transmission entre les modems 12 et 13 des dispositifs 26 et 27 et garantit donc un bon fonctionnement du réseau local 100 tout en empêchant la propagation, dans le réseau de distribution d'énergie 29, des ondes se propageant dans la ligne de distribution d'énergie 25a.

Les ondes ne se propageant pas dans le réseau de distribution d'énergie 29, celles-ci ne se propagent pas non plus dans le réseau de fourniture d'énergie 20.

Le dispositif de réflexion 40b est par exemple intégré dans la prise électrique mâle enfichée dans une prise électrique femelle 23. Avec ce type de configuration, il est très aisé pour un utilisateur d'un réseau local 100 de placer le dispositif de réflexion 40b dans le réseau local 100a.

Il est aussi à remarquer que dans cette variante, grâce au dispositif de réflexion 40b, on isole le réseau local 100a du reste du réseau de distribution d'énergie électrique 29.

En effet, le spectre en fréquence des signaux générés par les modems 12 et 13 est tel que ces signaux sont à la fois transmis en conduction et en rayonnement électromagnétique. En plaçant le dispositif de réflexion sur la prise 23a, seule la ligne de distribution d'énergie électrique 25a est susceptible de créer un rayonnement électromagnétique.

Selon une seconde variante de réalisation du réseau local 100a, le réseau local 100a comporte un dispositif de réflexion placé de la même manière que celui décrit précédemment en référence à la Fig. 3.

Ce dispositif de réflexion 40a (non représenté), placé entre la phase et le neutre du câble 28 dans le tableau électrique 22, réfléchit les ondes se propageant dans le réseau de distribution d'énergie 29 et ainsi bloque toute propagation de celles-ci à l'extérieur du réseau de distribution d'énergie électrique 29.

La ligne de distribution d'énergie 25a, conformément à la Fig. 2, comporte des éléments d'atténuation 30a, 30b, 30c, 30d et 30e créant des atténuations, voire des réflexions atténuant les ondes formées par les signaux électriques des modems 12 et 13.

Le tableau électrique 22 comporte des éléments d'atténuation constitués du circuit de protection F1, des lignes de distribution d'énergie 25b, 25c et 25d formant un coupleur.

Le dispositif de réflexion 40a est placé dans le réseau de distribution d'énergie 29 de manière à ce que l'onde réfléchie par celui-ci soit atténuée par les éléments d'atténuation F1, 25b, 25c, 25d, 30a, 30b, 30c et 30d.

Ainsi, la position prédéterminée du dispositif de réflexion 40a dans le réseau de distribution d'énergie 29 limite encore plus que dans la variante précédemment décrite l'influence de l'onde réfléchie sur la qualité de la transmission entre les modems 12 et 13 des dispositifs 26 et 27 et garantit donc un bon fonctionnement du réseau local 100a tout en empêchant la propagation, dans le réseau de fourniture d'énergie 20, des ondes se propageant dans le réseau de distribution d'énergie 29.

L'utilisateur du réseau local 100a peut aussi combiner l'utilisation d'un dispositif de réflexion 40a placé dans le tableau électrique 22 avec un dispositif de réflexion 40b placé dans une prise électrique mâle insérée dans une prise électrique femelle 23.

A titre d'exemple, des dispositifs de réflexion 40c, 40d et 40e sont placés respectivement sur les lignes de distribution d'énergie 25b, 25c et 25d.

Il est aussi à remarquer que dans cette variante, grâce aux dispositifs de réflexion 40c, 40d et 40e, on isole le réseau local 100a du reste du réseau de distribution d'énergie électrique 29.

En plaçant les dispositifs de réflexion 40c, 40d et 40e sur les prises électriques femelles respectives 23e, 23g et sur la douille des dispositifs d'éclairage 24, seule la ligne de distribution d'énergie électrique 25a est susceptible de créer un rayonnement électromagnétique.

Il est à remarquer que les dispositifs de réflexion 40c, 40d et 40e sont placés aux endroits les plus proches du tableau électrique 22.

Selon une seconde réalisation de l'invention, un réseau local 100b (délimité par des segments en pointillés épais) est réalisé avec la ligne de distribution d'énergie 25a et la ligne de distribution d'énergie 25b.

Un dispositif 50 est relié à la prise électrique femelle 23f. Ce dispositif 50 est par exemple un dispositif tel qu'un ordinateur ou un téléviseur apte à recevoir et/ou transmettre des informations avec les ordinateurs 26 et 27.

Le dispositif 50 est équipé d'un modem 51 similaire aux modems 12 et 13 des ordinateurs 26 et 27.

Ainsi, le réseau local 100b permet l'échange d'informations entre des dispositifs 26, 27 et 50 placés sur différentes lignes de distribution d'énergie électrique (25a et 25b).

Dans cette seconde réalisation, un dispositif de réflexion 40a est placé dans le réseau local 100b de la même manière que celui décrit précédemment en référence à la Fig. 3.

Le dispositif de réflexion 40a, placé entre la phase et le neutre du câble 28, réfléchit les ondes se propageant dans le réseau de distribution d'énergie 29 et ainsi bloque toute propagation de celles-ci à l'extérieur du réseau de distribution d'énergie électrique 29.

Le tableau électrique 22 comporte des éléments d'atténuation constitués des circuits de protection F1 et F2, des lignes de distribution d'énergie 25b, 25c et 25d formant un coupleur.

Comme nous l'avons précédemment décrit en référence à la Fig. 3, une partie a²Vi/4 de l'onde incidente Vi, grâce à l'effet de couplage du tableau électrique est retransmise sur la ligne de distribution d'énergie électrique 25b. Aussi, comme nous l'avons précédemment décrit en référence à la Fig. 3, une onde aVr/16 se propage à travers le circuit de protection F2 et forme un signal a²Vr/16 sur la ligne de distribution d'énergie 25b.

Ainsi, même si l'onde réfléchie a²Vr/16 est en opposition de phase avec l'onde incidente a²Vi/4, les amplitudes de l'onde incidente a²Vi/4 et de l'onde réfléchie a²Vr/16 sur la ligne 25b sont différentes et donc les ondes incidentes et réfléchies ne s'annulent pas mutuellement dans la ligne de distribution d'énergie 25b.

La ligne de distribution d'énergie 25a, conformément à la Fig. 2, comporte des éléments d'atténuation 30a, 30b, 30c, 30d et 30e créant des atténuations, voire des réflexions atténuant les ondes formées par les signaux électriques des modems 12 et 13.

La ligne de distribution d'énergie 25b comporte aussi des éléments d'atténuation non représentés semblables aux éléments d'atténuation de la ligne de distribution d'énergie 25a.

Le dispositif de réflexion 40a est placé dans le réseau de distribution d'énergie 29 de manière à ce que l'onde réfléchie par celui-ci soit atténuée par les éléments d'atténuation F1, F2, 25b, 25c, 25d, 30a, 30b, 30c, 30d et les éléments d'atténuation non représentés de la ligne de distribution d'énergie 25b.

Ainsi, la position prédéterminée du dispositif de réflexion 40a dans le tableau électrique 22 limite grandement l'influence de l'onde réfléchie sur la qualité de la transmission entre les modems 12 13 et 51 des dispositifs 26, 27 et 50. Le dispositif de réflexion 40a garantit ainsi un bon fonctionnement du réseau local 100b tout en empêchant la propagation, dans le réseau de fourniture d'énergie 20, des ondes se propageant dans le réseau local 100b.

Il est à remarquer que des dispositifs de réflexion 40d et 40e peuvent être placés de la même manière que ceux décrits dans la seconde variante de la première réalisation du réseau local 100a précédemment décrit.

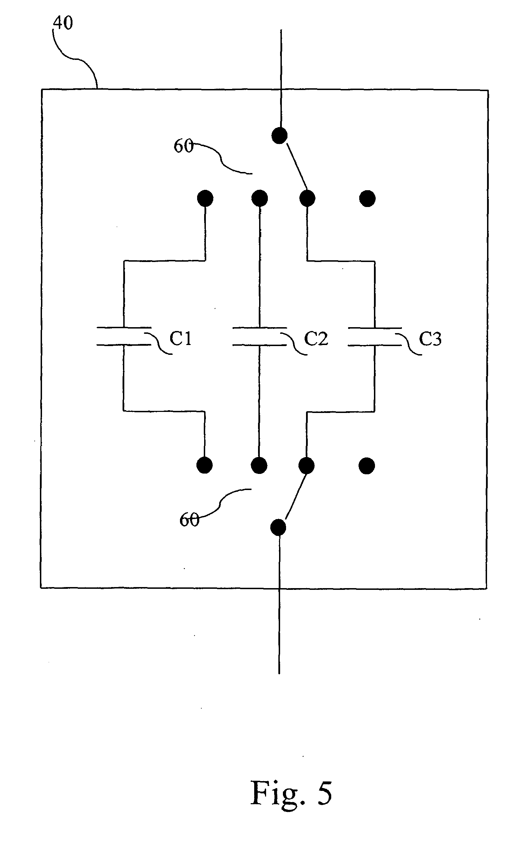

La Fig. 5 représente un exemple de réalisation d'un dispositif de réflexion 40 conforme à l'invention.

Le dispositif de réflexion 40 est intégré par exemple dans une prise électrique mâle apte à être branchée sur une prise électrique femelle 23, ou dans une douille d'un dispositif d'éclairage ou préférentiellement dans un boîtier (similaire à ceux utilisés pour les disjoncteurs différentiels) apte à être placé dans un tableau électrique 22.

Le dispositif de réflexion 40 comporte au moins un condensateur C1 présentant une impédance infinie pour les fréquences de l'ordre de 50Hz et une impédance très faible pour les fréquences comprises entre 4 et 20MHz.

La valeur du condensateur est déterminée en fonction du spectre en fréquence utilisé par les modems 12, 13 et 14.

En effet, dans les lignes de transmission, une impédance nulle en terminaison d'une ligne de transmission produit une réflexion de l'onde incidente formant ainsi une onde réfléchie. Dans notre cas, l'impédance nulle est réalisée par le condensateur.

Le dispositif de réflexion 40 représenté en Fig. 5 est constitué d'un commutateur 60 permettant à l'utilisateur, lors de l'installation du dispositif de réflexion, de sélectionner l'un des condensateurs C1, C2 ou C3 du dispositif de réflexion 40.

Les condensateurs C1, C2 et C3 sont préférentiellement des condensateurs papier métallisé de classe X1 supportant la tension délivrée par le réseau de distribution d'énergie électrique 29. Le condensateur C1 a une valeur de 10 nano Farad, le condensateur C2 a quant à lui une valeur de 22 nano Farad, tandis que le condensateur C3 a une valeur de 47 nano Farad.

Ces différentes valeurs permettent d'adapter le dispositif de réflexion 40 au réseau local utilisant le réseau de distribution d'énergie électrique 29 comme médium de transmission.

Le commutateur 60 du dispositif de réflexion 40 comporte aussi une quatrième position qui ne présente aucun court-circuit aux fréquences de fonctionnement des modems 12, 13 et 51. Cette position permet à l'utilisateur de désactiver le dispositif de réflexion 40 sans avoir à l'enlever. Ceci est particulièrement intéressant lorsque l'utilisateur désire communiquer avec un réseau local similaire au sien à travers le réseau de fourniture d'énergie 20.

Dans une configuration particulièrement simple, le dispositif de réflexion 40 est constitué d'un unique condensateur C2 intégré dans un boîtier similaire à ceux utilisés pour les disjoncteurs différentiels et est adapté pour être placé dans un tableau électrique 22.

Bien entendu, des dispositifs de réflexion 40 réalisés avec des inductances associées à des éléments capacitifs sont aisément réalisables par l'homme du métier utilisant les enseignements de la présente invention.

Bien entendu, la présente invention n'est nullement limitée aux modes de réalisation décrits ici, mais englobe, bien au contraire, toute variante à la portée de l'homme du métier.

## Revendications

1. Réseau local pour le transfert d'informations entre plusieurs dispositifs de communication (26 ; 27) reliés à un réseau de distribution d'énergie électrique (29) alternative de fréquence prédéterminée, les informations véhiculées dans le réseau local étant transférées sous forme de signaux électriques formant des ondes (Vi) sur le réseau de distribution d'énergie électrique (29) dans une bande de fréquence supérieure à la fréquence prédéterminée, le réseau de distribution d'énergie électrique (29) étant relié à un réseau de fourniture d'énergie électrique (20), **caractérisé en ce que** le réseau local comporte au moins un dispositif de réflexion (40 ; 40a ; 40b ; 40c ; 40d ; 40e) des ondes (Vi) formant des ondes réfléchies (Vr) sur le réseau de distribution d'énergie (29).

2. Réseau local selon la revendication 1, **caractérisé en ce que** le réseau de distribution d'énergie (29) comporte des éléments d'atténuation (30 ; 30a ; 30b ; 30c 30d ; 30e) des ondes du réseau de distribution d'énergie (29) et **en ce que** le dispositif de réflexion (40 ; 40a ; 40b ; 40c ; 40d ; 40e) est placé à un point prédéterminé du réseau de distribution d'énergie électrique (29) tel que les éléments d'atténuation (30 ; 30a ; 30b ; 30c 30d ; 30e) atténuent entre autres les ondes réfléchies (Vr) sur le réseau de distribution d'énergie (29).

3. Réseau local selon la revendication 2, **caractérisé en ce que** les éléments d'atténuation (30 ; 30a ; 30b ; 30c 30d ; 30e) sont constitués d'au moins un moyen de protection (F1 ; F2 ; F3 ; F4) d'une ligne de distribution d'énergie électrique (25 ; 25a ; 25b ; 25c ; 25d) du réseau de distribution d'énergie électrique (29).

4. Réseau local selon la revendication 2 ou 3, **caractérisé en ce que** le réseau de distribution d'énergie électrique (29) comporte plusieurs lignes de distribution d'énergie électrique (25 ; 25a ; 25b ; 25c ; 25d) et un tableau électrique (22) répartissant l'énergie électrique à chaque ligne de distribution d'énergie électrique (25 ; 25a ; 25b ; 25c ; 25d) et **en ce que** le tableau électrique (22) est un élément d'atténuation.

5. Réseau local selon l'une quelconque des revendications 2 à 4, **caractérisé en ce que** le dispositif de réflexion (40 ; 40a ; 40b ; 40c ; 40d ; 40e) est placé dans un tableau électrique (22).

6. Réseau local selon la revendication 2, **caractérisé en ce que** le dispositif de réflexion (40 ; 40a ; 40b ; 40c ; 40d ; 40e) est placé dans une prise électrique mâle insérée dans une prise électrique femelle (23 ; 23a ; 23b ; 23c ; 23d) du réseau de distribution d'énergie électrique (29).

7. Réseau local selon la revendication 6, **caractérisé en ce que** la prise électrique femelle (23 ; 23a ; 23b ; 23c ; 23d) est sur la ligne de distribution d'énergie électrique (25 ; 25a ; 25b ; 25c ; 25d) à laquelle sont reliés les dispositifs de communication (26 ; 27) et est placée entre les dispositifs de communication et le réseau de fourniture d'énergie électrique (29).

8. Dispositif pour le transfert d'informations entre plusieurs dispositifs de communication (26 ; 27) dans un réseau local (100 ; 100a ; 100b), les dispositifs étant reliés à un réseau de distribution d'énergie électrique (29) alternative de fréquence prédéterminée, les informations véhiculées dans le réseau local (100 ; 100a ; 100b) étant transférées sous forme de signaux électriques formant des ondes (Vi) sur le réseau de distribution d'énergie électrique (29) dans une bande de fréquence supérieure à la fréquence prédéterminée, le réseau de distribution d'énergie électrique (29) étant relié à un réseau de fourniture d'énergie électrique (20), **caractérisé en ce que** le dispositif comporte des moyens (40 ; 40a ; 40b ; 40c ; 40d ; 40e) pour réfléchir des ondes formant des ondes réfléchies (Vr) sur le réseau de distribution d'énergie (29).

9. Dispositif selon la revendication 8, **caractérisé en ce que** les moyens pour réfléchir et atténuer sont constitués d'au moins un condensateur (C1 ; C2 ; C3).

10. Dispositif selon la revendication 9, **caractérisé en ce que** les signaux électriques sont compris dans un spectre de fréquence entre 4 et 20 MHz et les moyens pour réfléchir sont constitués d'un condensateur (C1 ; C2 ; C3) ayant une capacité de l'ordre de 22 nano Farad.

11. Dispositif selon l'une quelconque des revendications 8 à 10, **caractérisé en ce que** le dispositif est intégré dans une prise électrique mâle.

12. Dispositif selon l'une quelconque des revendications 8 à 10, **caractérisé en ce que** le dispositif est intégré dans un tableau électrique (22).

13. Dispositif selon l'une quelconque des revendications 8 à 12, **caractérisé en ce que** le dispositif est placé entre la phase (28b) et le neutre (28a) du réseau de distribution d'énergie électrique (29).

## Claims

1. Local network for the transfer of information between several communication devices (26; 27) linked to an AC electrical energy distribution network (29) of predetermined frequency, the information conveyed in the local network being transferred in the form of electrical signals forming waves (Vi) on the electrical energy distribution network (29) in a frequency band above the predetermined frequency, the electrical energy distribution network (29) being linked to an electrical energy provision network (20), **characterized in that** the local network comprises at least one device (40; 40a; 40b; 40c; 40d; 40e) for reflecting the waves (Vi) forming reflected waves (Vr) on the energy distribution network (29).

2. Local network according to Claim 1, **characterized in that** the energy distribution network (29) comprises elements (30; 30a; 30b; 30c; 30d; 30e) for attenuating the waves of the energy distribution network (29) and **in that** the reflection device (40; 40a; 40b; 40c; 40d; 40e) is placed at a predetermined point of the electrical energy distribution network (29) such that the attenuation elements (30; 30a; 30b; 30c; 30d; 30e) attenuate inter alia the reflected waves (Vr) on the energy distribution network (29).

3. Local network according to Claim 2, **characterized in that** the attenuation elements (30; 30a; 30b; 30c; 30d; 30e) consist of at least one means (F1; F2; F3; F4) of protection of an electrical energy distribution line (25; 25a; 25b; 25c; 25d) of the electrical energy distribution network (29).

4. Local network according to Claim 2 or 3, **characterized in that** the electrical energy distribution network (29) comprises several electrical energy distribution lines (25; 25a; 25b; 25c; 25d) and an electrical board (22) apportioning the electrical energy to each electrical energy distribution line (25; 25a; 25b; 25c; 25d) and **in that** the electrical board (22) is an attenuation element.

5. Local network according to any one of Claims 2 to 4, **characterized in that** the reflection device (40; 40a; 40b; 40c; 40d; 40e) is placed in an electrical board (22).

6. Local network according to Claim 2, **characterized in that** the reflection device (40; 40a; 40b; 40c; 40d; 40e) is placed in an electrical plug inserted into an electrical socket (23; 23a; 23b; 23c; 23d) of the electrical energy distribution network (29).

7. Local network according to Claim 6, **characterized in that** the electrical socket (23; 23a; 23b; 23c; 23d) is on the electrical energy distribution line (25; 25a; 25b; 25c; 25d) to which the communication devices (26; 27) are linked and is placed between the communication devices and the electrical energy provision network (29).

8. Device for the transfer of information between several communication devices (26; 27) in a local network (100; 100a; 100b), the devices being linked to an AC electrical energy distribution network (29) of predetermined frequency, the information conveyed in the local network (100; 100a; 100b) being transferred in the form of electrical signals forming waves (Vi) on the electrical energy distribution network (29) in a frequency band above the predetermined frequency, the electrical energy distribution network (29) being linked to an electrical energy provision network (20), **characterized in that** the device comprises means (40; 40a; 40b; 40c; 40d; 40e) for reflecting waves forming reflected waves (Vr) on the energy distribution network (29).

9. Device according to Claim 8, **characterized in that** the means for reflecting and attenuating consist of at least one capacitor (C1; C2; C3).

10. Device according to Claim 9, **characterized in that** the electrical signals lie in a frequency spectrum between 4 and 20 MHz and the means for reflecting consist of a capacitor (C1; C2; C3) having a capacitance of the order of 22 nanofarads.

11. Device according to any one of Claims 8 to 10, **characterized in that** the device is integrated into an electrical plug.

12. Device according to any one of Claims 8 to 10, **characterized in that** the device is integrated into an electrical board (22).

13. Device according to any one of Claims 8 to 12, **characterized in that** the device is placed between the phase (28b) and the neutral (28a) of the electrical energy distribution network (29).

## Patentansprüche

1. Lokales Netz für die Übertragung von Informationen zwischen mehreren Kommunikationsvorrichtungen (26; 27), die mit einem Netz (29) zur Verteilung von elektrischer Wechselstromenergie mit vorbestimmter Frequenz verbunden sind, wobei die in dem lokalen Netz übertragenen Informationen in Form von elektrischen Signalen übertragen werden, die Wellen (Vi) auf dem Netz (29) zur Verteilung von elektrischer Energie in einem Frequenzband bilden, das höher ist als die vorbestimmte Frequenz, wobei das Netz (29) zur Verteilung von elektrischer Energie mit einem Netz (20) zur Versorgung mit elektrischer Energie verbunden ist, **dadurch gekennzeichnet, dass** das lokale Netz mindestens eine Reflexionsvorrichtung (40; 40a; 40b; 40c; 40d; 40e) für Wellen (Vi) aufweist, die auf dem Energieverteilungsnetz (29) Reflexionswellen (Vr) bildet.

2. Lokales Netz nach Anspruch 1, **dadurch gekennzeichnet, dass** das Energieverteilungsnetz (29) Dämpfungselemente (30; 30a; 30b; 30c; 30d; 30e) für die Wellen des Energieverteilungsnetzes (29) aufweist und dass die Reflexionsvorrichtung (40; 40a; 40b; 40c; 40d; 40e) an einem vorbestimmten Punkt des Netzes (29) zur Verteilung von elektrischer Energie angeordnet ist, so dass die Dämpfungselemente (30; 30a; 30b; 30c; 30d; 30e) unter anderem die Reflexionswellen (Vr) auf dem Energieverteilungsnetz (29) dämpfen.

3. Lokales Netz nach Anspruch 2, **dadurch gekennzeichnet, dass** die Dämpfungselemente (30; 30a; 30b; 30c; 30d; 30e) aus mindestens einem Schutzmittel (F1; F2; F3; F4) einer Leitung (25; 25a; 25b; 25c; 25d) zur Verteilung von elektrischer Energie des Netzes (29) zur Verteilung von elektrischer Energie gebildet sind.

4. Lokales Netz nach Anspruch 2 oder 3, **dadurch gekennzeichnet, dass** das Netz (29) zur Verteilung von elektrischer Energie mehrere Leitungen (25; 25a; 25b; 25c; 25d) zur Verteilung von elektrischer Energie und einen Schaltschrank (22) aufweist, der die elektrische Energie zu jeder Leitung (25; 25a; 25b; 25c; 25d) zur Verteilung von elektrischer Energie verteilt, und dass der Schaltschrank (22) ein Dämpfungselement ist.

5. Lokales Netz nach einem der Ansprüche 2 bis 4, **dadurch gekennzeichnet, dass** die Reflexionsvorrichtung (40; 40a; 40b; 40c; 40d; 40e) in einem Schaltschrank (22) angeordnet ist.

6. Lokales Netz nach Anspruch 2, **dadurch gekennzeichnet, dass** die Reflexionsvorrichtung (40; 40a; 40b; 40c; 40d; 40e) in einem elektrischen Stecker angeordnet ist, der in eine elektrische Steckdose (23; 23a; 23b; 23c; 23d) des Netzes (29) zur Verteilung von elektrischer Energie eingesetzt ist.

7. Lokales Netz nach Anspruch 6, **dadurch gekennzeichnet, dass** die elektrische Steckdose (23; 23a; 23b; 23c; 23d) auf der Leitung (25; 25a; 25b; 25c; 25d) zur Verteilung von elektrischer Energie liegt, mit der die Kommunikationsvorrichtungen (26; 27) verbunden sind, und zwischen den Kommunikationsvorrichtungen und dem Netz (29) zur Versorgung mit elektrischer Energie angeordnet ist.

8. Vorrichtung für die Übertragung von Informationen zwischen mehreren Kommunikationsvorrichtungen (26; 27) in einem lokalen Netz (100; 100a; 100b), wobei die Vorrichtungen mit einem Netz (29) zur Verteilung von elektrischer Wechselstromenergie mit vorbestimmter Frequenz verbunden sind, wobei die in dem lokalen Netz (100; 100a; 100b) übertragenen Informationen in Form von elektrischen Signalen übertragen werden, die Wellen (Vi) auf dem Netz (29) zur Verteilung von elektrischer Energie in einem Frequenzband bilden, das höher ist als die vorbestimmte Frequenz, wobei das Netz (29) zur Verteilung von elektrischer Energie mit einem Netz (20) zur Versorgung mit elektrischer Energie verbunden ist, **dadurch gekennzeichnet, dass** die Vorrichtung Mittel (40; 40a; 40b; 40c; 40d; 40e) zum Reflektieren von Wellen aufweist, die Reflexionswellen (Vr) auf dem Energieverteilungsnetz (29) bilden.

9. Vorrichtung nach Anspruch 8, **dadurch gekennzeichnet, dass** die Mittel zum Reflektieren und Dämpfen aus mindestens einem Kondensator (C1; C2; C3) gebildet sind.

10. Vorrichtung nach Anspruch 9, **dadurch gekennzeichnet, dass** die elektrischen Signale in einem Frequenzspektrum zwischen 4 und 20 MHz liegen und die Mittel zum Reflektieren aus einem Kondensator (C1; C2; C3) mit einer Kapazität in der Größenordnung von 22 Nanofarad gebildet sind.

11. Vorrichtung nach einem der Ansprüche 8 bis 10, **dadurch gekennzeichnet, dass** die Vorrichtung in einen elektrischen Stecker integriert ist.

12. Vorrichtung nach einem der Ansprüche 8 bis 10, **dadurch gekennzeichnet, dass** die Vorrichtung in einen Schaltschrank (22) integriert ist.

13. Vorrichtung nach einem der Ansprüche 8 bis 12, **dadurch gekennzeichnet, dass** die Vorrichtung zwischen der Phase (28b) und dem Nullleiter (28a) des Netzes (29) zur Verteilung von elektrischer Energie angeordnet ist.
